# EUROPEAN PATENT APPLICATION

(11) **EP 3 640 862 A1**
(43) Date of publication of application: **22.04.2020**
(21) Application number: 18290119.9
(22) Date of filing: 15.10.2018
(51) Int. Cl.: G06N 3/063, G06N 3/04

(54) **NEURAL NETWORK EVALUATION TOOL AND METHOD**

(71) Applicant: GrAl Matter Labs S.A.S., 75012 Paris (FR)
(72) Inventor: REINAULD, Julien, 5656 AE Eindhoven (NL); BORTOLOTTI, Daniele, 5656 AE Eindhoven (NL)
(74) Representative: V.O.

(57) **Abstract**

A computer implemented method is provided for assisting a designer in designing a neural network, the method comprises at least a network specification access step (S1), a network modification step (S2) and a modified network execution step (S3). In the network specification access step (S1) a computing device (CMP1) accesses a network specification memory unit with an original network specification (ONS). In the network modification step (S2) a computing device modifies the original network specification to a modified network specification (MNS) by including further output message transfer connections. In the modified network execution step (S3) a computing device (CMP2) executes the modified neural network. This step includes repeatedly computing neural states of neural units in the modified neural network and transmitting output messages via the output message transfer connections and/or the further output message transfer connections and converting output messages into output data to be provided to the developer. The application further provides a design system and a neuromorphic processing system

## Description

### BACKGROUND

The present invention relates to a neural network evaluation tool. More in particular, the present invention relates to an evaluation tool for a neural network embodied in a time multiplexed manner in a neuromorphic processor.

The present invention further relates to a neural network evaluation method, more in particular an evaluation method for a neural network embodied in a time multiplexed manner in a neuromorphic processor.

The neural network as considered in this application as a set of neural units which is organised in a network by mutual connections to transfer messages. A message may contain information represented by the point in time on which it is issued, for example in relation to a point in time on which a preceding message was issued. Alternatively or additionally a message may contain information represented by a value of another parameter than the time. The state of neural units in the neural network generally depends on received messages. Furthermore the state may change autonomously as a function of time. The neural network may be loosely compared with a biological neural network, comprising neurons as the neural units. Therein the network is defined by the connections between the outgoing synapses (axons) and the incoming synapses (dendrites). The messages transmitted are the spikes that occur when a neuron exceeds its threshold potential.

The neural network may be implemented in various ways, for example in a hardware implementation wherein each neural unit is represented by a processing element and wherein dedicated communication paths are provided as the connections between the neural units.

Typically, however, the neural network may be implemented as a program to be executed by a programmable neuromorphic processor. A programmable neuromorphic processor comprise a neural state memory, a connectivity memory, a message buffer, a neural processor and a controller. It may embody a neural network in that it stores a specification of the network topology in terms of its mutual connections in the connectivity memory. In operation it stores the neural states of the neural units in respective addressable locations of its neural state memory and uses the neural processor to update the state of respective ones of these neural states in a time-multiplexed manner. To that end the neural processor alternatively accesses the state of a selected one of the neural units, updates the neural state of the selected neural unit as a function of the messages received for that neural unit and/or as an autonomous state development as a function of time. It then determines whether the state update implies that a message is to be transmitted by the selected neural unit to recipient neural units. If this is the case it identifies the recipient neural units using the connectivity information in the connectivity memory. If a message is transmitted, it may provide for a further state update of the selected neural unit, for example by resetting the state of the selected neural unit to a reference state. A message buffer may be provided to temporarily store the transmitted messages until they are retrieved therefrom when the neural processor has selected the recipient neural unit. The connectivity memory may further include a specification for a delay (if any) with which an output message of the first neural unit is transmitted to the second neural unit, and how the second neural unit is to use the message to update its state. In addition the neuromorphic processor may comprise one or more controllers for general control functions, such as the selection of the neural units, accessing the connectivity memory, and managing the message buffer. As an alternative for neural networks having a relatively high number of neural units, a neuromorphic processing system may be provided comprising a plurality of neuromorphic processors connected by a message transfer network. In this case, a message from a neural unit can be transmitted to another neural unit within the neuromorphic processors or via the message transfer network to another neural unit within another neuromorphic processor in the neuromorphic processing system.

One such processor is specified in previously filed, not yet published European patent application 18290090.2 (P119875EP00).

According to some approaches, neural networks are provided as unconfigured multilayer networks and are subsequently trained to perform recognition and classification tasks by offering training data. This approach is however not applicable if insufficient training data is available. Also it is a disadvantage that generally, such a network uses more computational means than would have been necessary to perform the task.

According to a different approach, a neural network may be designed by a human designer in order to perform the task with a minimum of computational means, while obviating the need of training data.

Designing message exchanging neural networks however is complicated due to the inherently asynchronous nature of such a network. Therewith generally available design tools are not suitable for this purpose. Whereas a debugging tool may assist the designer in designing a message exchanging neural network it should be avoided that the debugging tool interferes with the normal operation of the neural network and therewith would instead complicate the design process..

Considering the above, there is a need for means that aid the designer in more efficiently designing message exchanging neural networks in a time-multiplexed neuromorphic processor.

### SUMMARY

According to a first object, a computer implemented method is provided for assisting a designer in designing an implementation of a neural network.

According to a second object a design system is provided for assisting a designer in designing an implementation of a neural network.

The method according to the first aspect comprises at least a network specification access step, a network modification step and a modified network execution step.

In the network specification access step a computing device accesses a network specification memory unit with an original network specification, including a specification of message transfer connections for transfer of messages. The message transfer connections at least comprise internal message transfer connections between neural units of the neural network, and output message transfer connections from neural units of the neural network to an output host interface. Typically the original network specification will also include input message transfer connections to enable the neural network to receive input messages, but this is not strictly necessary, for example in the case of a neural network designated as signal generator. In case input message transfer connections are included executing the modified neural network may include providing test data as a function of time and converting the test data into input messages to be transferred with the input message transfer connections.

In the network modification step a computing device modifies the original network specification to a modified network specification by including further output message transfer connections.

In the modified network execution step a computing device executes the modified neural network. This including repeatedly computing neural states of neural units in the modified neural network and transmitting output messages via the output message transfer connections and/or the further output message transfer connections and converting output messages into output data to be provided to the developer. The computing device is configure to include in said output messages information specifying an identity of the neural unit from which the message originated.

By this method, the network designer obtains more insight in the operation of the network, without changing its function. There with the methods facilitates the design process.

An embodiment, may further be contemplated wherein the network modification step comprises extending the specification of message transfer connections with further input message transfer connections. In this case additional test data can be supplied to the modified neural network to see how this affects its operation.

In an embodiment the output message transfer connections in the original network specification are message transfer connections from neural units of the neural network to a first output host interface and the further output message transfer connections included in the modified network specification are message transfer connections from neural units of the neural network to a second output host interface. This facilitates processing of output messages for the purpose of debugging the neural network.

Operation of the neural network as specified by the modified neural network specification may be simulated by a computing device, for example the computing device used to access and modify the network specification. In an embodiment of the method the modified neural network specification is loaded into a network specification memory of a neuromorphic processor and the modified neural network is executed in the neuromorphic processor. This facilitates debugging larger neural networks or neural networks having a higher input rate. In an embodiment the neuromorphic processor comprises a message exchange network and at least one neural processor module connected as a network node to the message exchange network, the at least one neural processor module comprising a neural state memory unit, having respective addressable memory locations for storing a state of respective neural units and a shared processing facility for computing the neural states in a time-multiplexed manner, the neural units of the at least one neural processor module having a common further output message transfer connections. In this way the topology of the network is strongly simplified. During execution of the neural network, each neural unit which participates in the neural network will be selected by the shared process facility and when the shared process facility determines that the selected neural unit issues a message, it transmits one associated message from its associated node to the host interface responsible for receiving and converting debug output messages.

In an embodiment the computing device executing the neural net e.g. a neuromorphic processor, comprises a range memory unit that specifies for each neural unit a range of addressable locations in a transfer connection memory unit, each addressable location containing information about message transfer connections originating from said each neural unit. In that case, the step of including further output message transfer connections comprises extending the respective address range to include a further addressable memory location of the transfer connection memory unit. and storing therein information pertaining to a connection to a host interface for converting output messages into output data.

In a particular embodiment of the computing device comprising a range memory unit the original network specification comprises for each neural unit at least one free addressable memory location in the transfer connection memory unit at an address preceding or succeeding the range indicated for said each neural unit. In that case including a further output message transfer connection comprises extending the respective address range to include the at least one free addressable memory location, and storing therein the information pertaining to the connection to the host interface for converting output messages into output data.

In an embodiment information about connections for transfer of messages originating from a neural unit is distributed as first connection information in a transfer connection reference memory unit and second connection information in a transfer connection specification memory unit. The first connection information of a connection comprises at least a reference to an addressable memory location in the transfer connection specification memory unit where the latter comprises the second information for said connection. The combination of a transfer connection reference memory unit and a transfer connection specification memory unit may be used in combination with a range memory unit. In that case, the range of addressable locations in the transfer connection memory unit pertains to addressable locations in the transfer connection reference memory unit. Alternatively, the combination of a transfer connection reference memory unit and a transfer connection specification memory unit may be used without using a range memory unit. In that case an addressable location in the transfer connection reference memory unit may include a plurality of references to the transfer connection specification memory unit.

An embodiment of the computing device having the transfer connection information distributed as first connection information and second connection information comprises a message exchange network and a plurality of processing modules that communicate to each other via the message exchange network. Each processing module therein may comprise a respective transfer connection reference memory unit and a respective transfer connection specification memory unit. First connection information of a connection may be stored in a transfer connection reference memory unit of the processing module of the neural unit where the connection originates and the second connection information of the connection in a transfer connection specification memory unit of the processing module of the neural unit to which the connection directed or of a host interface to which the connection is directed. In case all debug information is transmitted to a common debug output host interface, a single addressable memory location in a transfer connection specification memory unit is sufficient to specify the second connection information. The first connection information may further comprise information about a delay with which messages are to be transmitted via the connection. In this way the processing module comprising the neural unit that transmits the message always has available the delay information, to determine with which priority the message is to be transmitted via the message exchange network.

Various options are possible for the network modification step. According to a first option the modification is user controlled. The method may for example comprise a step of receiving user input specifying a neural unit in the neural network, and subsequently extending the specification of message transfer connections with a further output message transfer connection for the specified neural unit. Alternatively the modification step may comprise extending the specification of message transfer connections with a further output message transfer connection for each neural unit not having an output message transfer connection in the original network specification.

To further facilitate the designer in inspecting operation of the neural network the network execution step may comprise displaying a visual representation of a state of the neural network as a function of time during execution. In one embodiment the visual representation is provided as a graph showing signal values and state parameter values as a function of time. In another embodiment, a visual representation may be provided of the neural network that is executed and the neural units and/or their message transfer connections may be displayed in a manner dependent on their state. For example a neural unit transmitting a message (for example indicating that it is firing) may be highlighted and the transmission of the message through a connection may be visualized as a moving highlight through the connection in accordance with a delay specified for the connection. A computing device executing the modified neural network, may have a host interface, e.g. a dedicated debug host interface, that identifies the neural unit that transmitted a debug message and plot a graph of that neural unit as a function of a time of receipt of the message or of a time the message was generated according to a time stamp contained in the message. This results in a binary graph with spikes at the points of tine of receipt or indicated by the time stamp. The computing device may alternatively highlight the visual representation of the identified neural unit. Using the connection information the computing device may further reconstruct the transfer of a message from the message sending neural unit to the recipients and visualize the transmission of the message as moving highlight through the displayed connection at a speed according to the delay time of the connection.

The system according to the second aspect comprises a network specification memory module, a network modification module and a network execution module.

The network specification memory module is provided for storing a network specification, including a specification of message transfer connections as defined above, which may comprise internal message transfer connections, output message transfer connections, and optionally input message transfer connections.

The network modification module is provided for accessing an original network specification in the network specification memory module and for modifying the original network specification to a modified network specification by including further output message transfer connections.

The network execution module is provided for repeatedly computing neural states of neural units in the modified neural network and converting output messages into output data to be provided to the designer.

According to a third aspect, also a neuromorphic processing system is provided that comprises a message exchange network and at least one neural processor module connected as a network node to the message exchange network. The at least one neural processor module comprises at least one neural state memory unit, at least one network specification memory unit and a shared processing facility.

The at least one neural state memory unit, has respective addressable memory locations for storing a state of respective neural units.

The at least one network specification memory unit is provided for storing an original network specification, including a specification of message transfer connections as defined above.

The shared processing facility is provided for computing the neural states in a time-multiplexed manner.

The at least one neural processor module is selectively operable in a first and a second operational mode. When operating in the first operational mode it executes the neural network by providing for a transfer of messages as specified by the original network specification. When operating in the second operational mode it does not only provide for a transfer of messages as specified by the original network specification but in addition it provides for a transfer of a copy of each message from the network node of the at least one neural processor module to an output host interface.

### BRIEF DESCRIPTION OF THE DRAWINGS

FIG. 1 schematically shows a neural unit;
FIG. 2A-2D schematically show examples of neural networks comprising such neural units;
FIG. 3 schematically shows a neural processing system;
FIG. 4 shows aspects of a neural processing system in more detail;
FIG. 5 schematically illustrates a design method;
FIG. 6A-6C show a first option to store network specification data;
FIG. 7 shows a second option to store network specification data;
FIG. 8 shows a third option to store network specification data;
FIG. 9 shows a fourth option to store network specification data;
FIG. 10 schematically shows a further embodiment of a neural processing system.

### DETAILED DESCRIPTION OF EMBODIMENTS

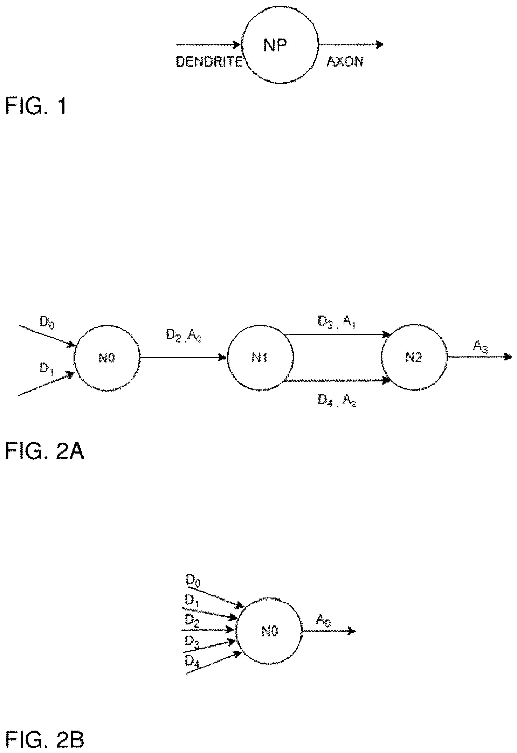

A neural unit. may be represented as shown in FIG. 1, it comprises a neural process element NP, has at least one input synapse, also denoted as dendrite and at least one output synapse, also denoted as axon. A neural unit is capable of assuming a neural state which depends on input received from the at least one input synapse. In a particular state the neural unit may issue a message via its at least one output synapse to other neural units or to itself. The state may for example be selected from a plurality of states comprising an initial state, one or more transitional states and a message issuing state. Subsequent to issuing the message the neural unit may fall back to its initial state. Information may be encoded in the message by data explicitly contained in the message and/or encoded as a temporal distance between subsequent messages. In addition to being responsive to input messages, a neural state may optionally evolve autonomously as a function of time, for example by a transition towards the initial state if it has not received a message for some time. The at least one input synapse of the neural unit may modify a received input message, for example it may apply a weight factor to a value represented by the message. The weight factor may be positive or negative. The at least one output synapse may transmit the message with a predetermined delay.

FIG. 2A-2D show exemplary neural networks that may be composed from such neural units. More in particular FIG. 2A shows a message exchanging neural network with 3 neural units (N0. N1 and N2) connected with synapses that are classified into input synapses (Di) and output synapses (Ai).

FIG. 2B shows a spiking neural network with one neural unit N0, five input synapses (D0,..., D4) and one output synapse A0.

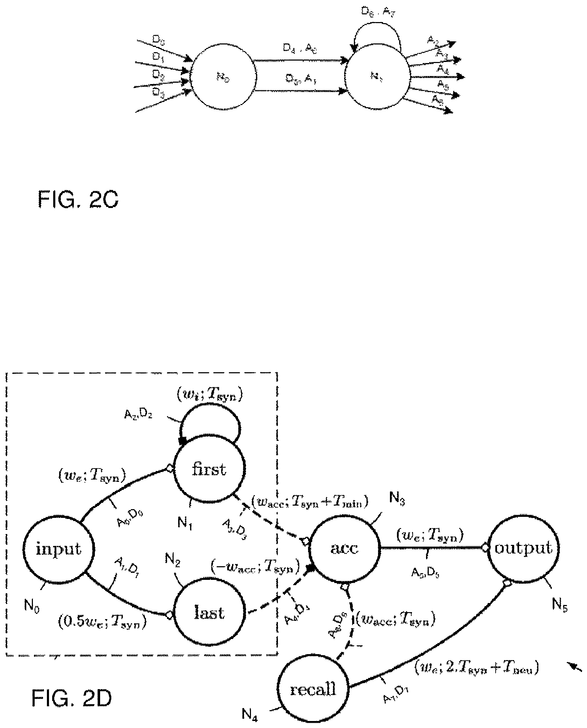

FIG. 2C shows an example with two neural units N0,N1, seven input synapses (D0,..., D6) and eight output synapses (A0, A1, ..., A7).

FIG. 2D shows an unsigned memory network. These and other examples can be found in international application WO 2017/009543.

Various options are available to implement a neural network. One straightforward option is a one to one translation of its parts into functional units. For example each neural processor may be implemented as a separate digital or an analog processor unit, and each connection formed by an output synapse extending into an input synapse may be provided as a separate data channel. Additional functionalities may be provided to convert external data to neural messages that can be provided as input to recipient neural units in the neural network and to convert neural messages from output neural units into output data to be processed by other computation means.

A further option is to implement the neural network as an FPGA.

It is not necessary that each element of the neural network is represented by a unique physical element in the functioning implementation. For example a neural processor module may be provided comprising a neural state memory unit with a proper addressable memory location for each of a plurality of neural units. The neural units of the neural processor module may share a common processor unit that updates their states. An example of such a neural processor module is specified in detail in previously filed, not yet published European patent application 18290090.2.

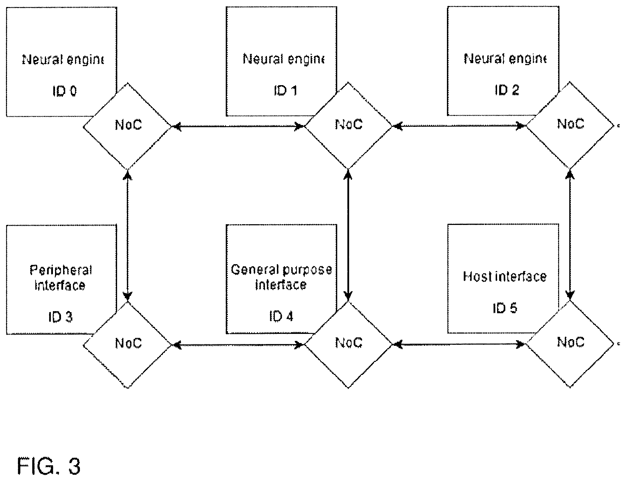

Larger neural networks may be implemented in a neural processing system that comprises a plurality of such neural processing modules arranged in a message exchange network. FIG. 3 shows an example of such a neuromorphic processor system. Preferably each neural processing module in the neural processing system performs a well-defined part of the neural network to minimize message transmission via the message exchange network, but this is not essential.

These are denoted as neural engines ID0, ID1, ID2. The neuromorphic processor system in FIG. 3 further comprises a peripheral interface (ID3), a general purpose interface (ID4) and a host interface (ID5). The host interface (ID5) provides an access for a host computer (not shown here) to load connectivity into the connectivity memory unit of each of the neuromorphic processors.
The host interface may achieve this by transmitting a connectivity load message to a selected one of the neural processors. The connectivity load message comprises an indication specifying that the content of the message is a specification related to a connection. A connection is minimally defined by a source neural unit and a destination neural unit. The definition may further include information specifying a delay with which a message is transferred from the source neural unit to the destination neural unit. The definition may further include information about the manner in which a message is handled by the destination neural unit.

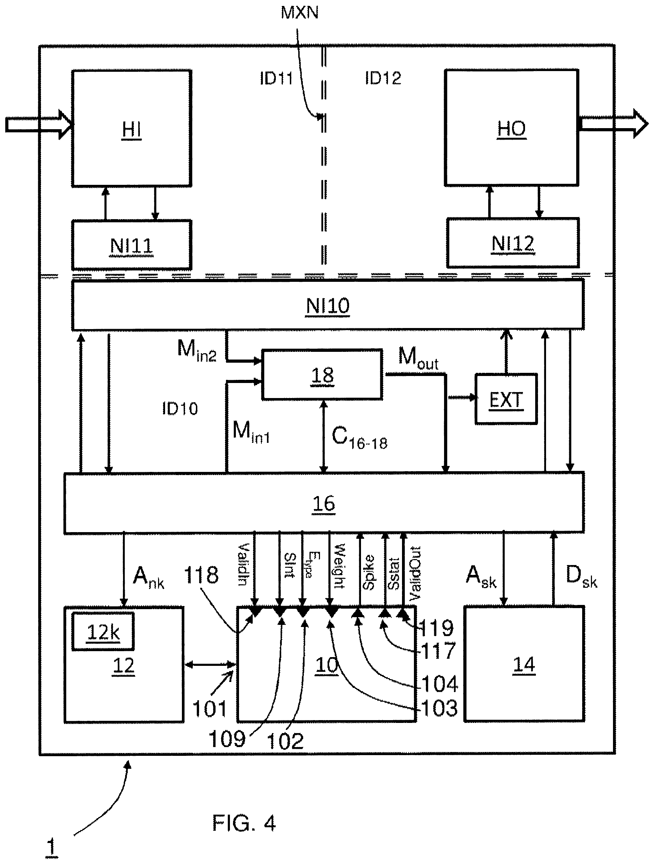

FIG. 4 schematically shows an embodiment of a neuromorphic processing module attached as a network node ID10, for time-multiplexed execution of a neural network comprising a plurality of neural units. The neuromorphic processing module 1 comprises an neural functional unit 10, a neuron state memory unit 12, a network specification memory 14, a controller 16, and a message buffer 18. In an operational state, the controller 16 in a time-multiplexed manner provides the neural functional unit 10 access to respective neuron state data stored in a dedicated addressable memory location (e.g. 12k) for a currently selected neural unit (e.g. k) in the neuron state memory unit 12. To that end it addresses memory 1.2 with the proper address Aₙₖ so that neural functional unit 10 can access that address via connection 101. In this example, the memory locations in neural state memory unit 12 include all state information of a neural unit. Alternatively, neural state information of mutually different type may be stored at mutually different addresses and/or may be stored in mutually different memory units.

The controller enables the neural functional unit 10 to distribute event messages Min1 to other neural units via event message buffer 18, and/or to update the accessed state on the basis of event messages for the selected neural unit. Event messages, e.g. Min2 may also received from other network nodes via the message exchange network MXN, and similarly event messages may be transmitted from other network nodes via the message exchange network MXN with external message transmission module EXT.

In this case a single neural functional unit 10 is provided to perform all neural computations. The neural functional unit 10 is configured to update the state of neural unit to which it is given access by the controller 16. To that end the controller 16 retrieves messages directed to the currently selected neural unit and in accordance therewith provides control signals to the neural functional unit 10. In the example shown. The neural functional unit 10 has an inputs, 118, 109, 102, 103 for receiving control signals ValidIn, Sint, Etype, and Weight. These control signals are defined as follows:
- E_{type}: a signal indicative for a type of input message
- Weight: a signal indicative for a weight to be assigned to the input message
- ValidIn: Indicating validity of the control signals E_{type} and Weight
- Sint: Causing the neural functional unit to consolidate the effect of received input messages on the state of the currently selected neural unit
The neural functional unit 10 has an outputs 104, 117, 119 to provide output signals Spike, Sstat and ValidOut. These are defined as follows:
- Spike: a signal indicating that the currently selected neural unit has achieved a firing state.
- Sstat: a signal providing further state information.
- ValidOut: indicating validity of the output signals.

Dependent on the type of input message as indicated by Etype, the effect of the message on the state of the selected neural unit is different. For example the message may result in an incidental change of state, in a direction from an initial state to a firing state or reversely. Another type of message may result in a dynamic state change. For example, upon receipt of the message the state may start to change continuously in a direction from an initial state to a firing state or reversely. Such a continuous state change may be according to various functions, e.g. a linear function or an exponential function. In addition message may transmitted that change internal gate settings.

The signal Sstat in particular may indicate whether the status of the neural unit is active or not. A neural unit is active if it has received an input message which is not yet consolidated, or if it has a continuously changing state. If the signal Sstat indicates that a currently selected neural unit is not active, for example if subsequent to a firing event it falls back to an initial state, its state does not have to be updated until it receives an input message.

Exemplary implementations of the neural functional unit 10 and associated processing and storage elements are described in more detail in previously filed European patent application 18290095.1 (P120286). As discussed therein it is an alternative option to use multiple neural functional units, for example one for each of a plurality of neural computation tasks.

The controller 1.6 enables the neural functional unit 10 to distribute (event) messages. The neural functional unit 10 may initiate distribution of a message by activating output signal "Spike" to the controller 16. The controller then accesses network specification memory 14 to obtain the message transfer connection information Dₛₖ, for the neural unit k, stored at, address Aₛₖ, The message transfer connection information Dₛₖ includes an indication of one or more neural units that are designated as recipients. The message transfer connection information Dₛₖ may further include information indicative for a type of event, i.e. indicative for how the recipient neural unit is to respond to the event and information indicative for a weight with which the recipient receives the event. Also the message transfer connection information Dₛₖ may include a specification for a delay with which the event message is to be delivered.

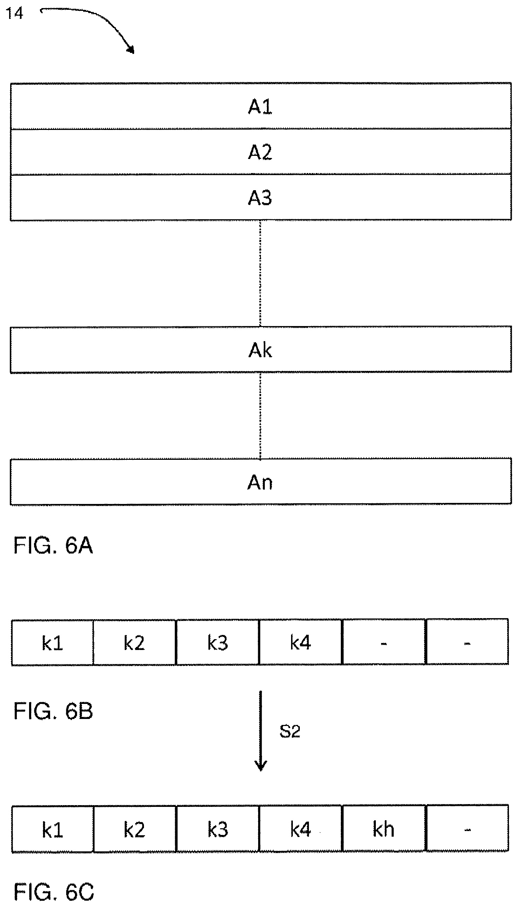

As specified later below with reference to FIG. 6A, 6B, 6C, 7 and 8 various options are available to store the message transfer connection information.

In addition FIG. 4 schematically shows a network node ID 12 with a host interface HO that exports output data generated by the neural network to a host. The module HO may for example convert output messages generated by a neural unit into a data format to be processed further by the host. Also FIG. 4 schematically shows a network node ID11 with a host interface "From HI that provides input data for the neural network. The input data may be data to be processed by the neural network. Additionally, input data may comprise configuration data, i.e. connectivity data to be stored in network specification memory 14. The host interface HO may provide for a format conversion, for example conversion of the input data into a message format Mᵢₙ.

As a further option, a neural network may be emulated by a general purpose processor. This is advantageous in that no dedicated hardware is required, and may be applicable for relatively small neural networks and/or neural networks that do not have a high input data load.

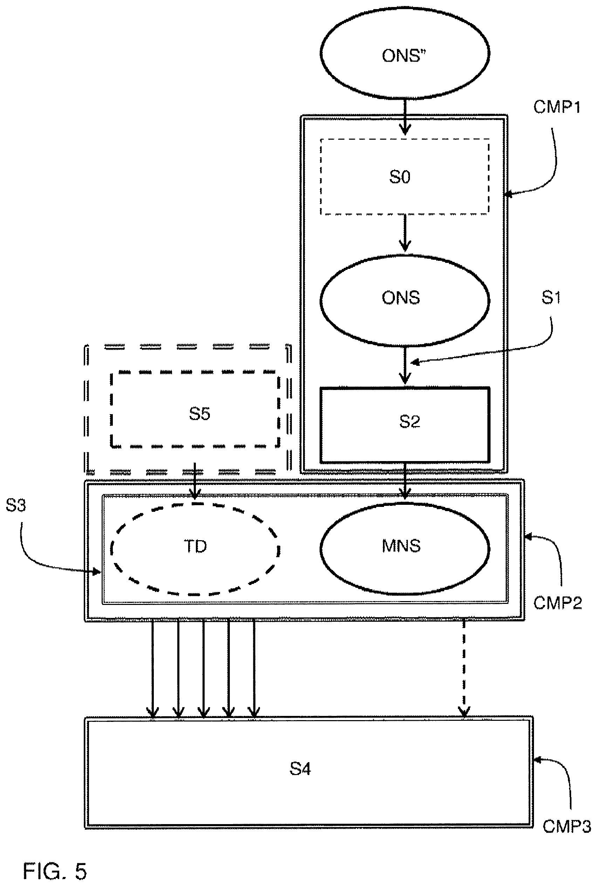

As noted above, it is a challenging task to design neural networks, regardless the way in which they are implemented physically. FIG. 5 schematically illustrates a computer implemented method for assisting a designer in designing a neural network. The method comprises a first step S1, wherein a computing device CMP1 accesses a network specification memory unit with an original network specification ONS. The wording "a computing device" is used to denote any type of device that is capable of performing logical and mathematical operations whether by electronic or optic means or otherwise. The computing device performing this step S1 is typically a general purpose computer. The original network specification may be directly prepared by a designer, or may be converted (S0) to a more suitable format to be accessed in step S1, for example from a JSON-description ONS" into a csv-format.

The original network specification ONS includes a specification of message transfer connections for transfer of messages from a neural unit to another neural unit. The original network specification further includes output message transfer connections from neural units of the neural network to an output host interface. Usually the original network specification also includes input message transfer connections from an input host interface to neural units of the neural network. In some cases input message transfer connections can be absent, for example if the original network specification specifies a signal generating network.

In step S2 a computing device modifies the original network specification ONS to a modified network specification MNS by including further output message transfer connections. These may be output message transfer connections from neural units of the neural network to the output host interface (regular output host interface) used for the output message transfer connections that were already specified in the original network specification. Preferably the further output message transfer connections are directed to a dedicated output host interface, different from the regular output host interface.

In step S3 the modified neural network as specified by the modified network specification MNS is executed by "a computing device" CMP2. The computer executing the modified neural network may be the same as the computing device that performed the previous steps S1 (optionally preceded by step S0), and S2, but may alternatively be a more dedicated processing system for this purpose, for example a time-multiplexed processor as specified in the previously filed, not yet published European patent application 18290090.2, which is schematically illustrated in FIG. 4. Alternatively, the neural network may be implemented in an FPGA, or may even be provided as a hardware implementation wherein each neural unit is embodied as a respective neural processor and/or each message transfer connection is separately wired. A neural processor, whether dedicated to a particular neural unit or shared in a time-multiplexed manner may include digital and/or analog computation means.

The execution S3 includes repeatedly computing neural states of neural units in the modified neural network and transmitting output messages via the output message transfer connections and/or the further output message transfer connections. In step S4, the output messages are converted into output data to be provided to the designer. Typically, this conversion is in real-time to optimally enable the designer to monitor the behavior of the neural network. For example conversion may be provided by a host interface communicating with the neural processor modules via a common message exchange network. Alternatively, this may take place in a later stage. As a result of the modification of the neural network specification the host interface receives additional output messages. The computing device CMP2 that executes the modified neural network is configured to include in these messages information identifying the neural unit that transmitted the message. This is in contrast with the transfer of messages required for normal execution of a neural network. In the latter case the identity of the transmitter is not relevant. In that case the recipient merely processes the receipt of the message regardless its origin.

In step S4 the (debug) host interface receives the additional output messages for a computing device CMP3. The computing device may use the original network specification and the messages including the identity of the transmitting neural unit to display a visual representation of a state of the neural network as a function of time during execution. For example the computing device CMP3 may display a graphic representation of the neural states of each of the neural units, for example as a binary graph with a sequence of spikes for each traced neural unit, with a spike for each point in time associated with the debug message. The associate time is for example a time of receipt by the host or a time-stamp contained in the message. In another example the computing device may provide a visual representation of the neural network being executed and further visually represent therein the neural units and/or their message transfer connections in a manner dependent on their state. It is not necessary, or even not desired that the visual representation includes the additional message transfer connections that were included in the modification step S2.

A mentioned above, the operation of the neural network may depend on input data. For that purpose test data TD may be generated in step S5. In that case input message transfer connections from an input host interface to neural units of the neural network are included in the original neural network specification. During execution of the (modified) neural network in step S3, test data is provided as a function of time and the test data is converted into input messages to be transferred with the input message transfer connections..

In an embodiment the modifying step S2 may extend the network specification also with debug input message transfer connections. During execution in step S3, debug test data may be supplied as input to the modified neural network and the response of the modified neural network to this input may be observed. Hence, the purpose of the debug input message connections is substantially different from the purpose of the further output connections, in that they are intended to be used to influence the operation of the modified neural network, whereas the further output connections are provided for observing the internal operation of the modified neural network which should be identical to that of the original neural network.

Dependent on the specification of message transfer connections various options are available to perform step S2.

According to one option, as illustrated in FIG. 6A, 6B, 6C, all connectivity information for a neural unit may be stored in a single addressable memory location. In FIG. 6A, neural unit k has an associated memory location at address Ak, which contains all information about its output connections. For example, as shown in FIG. 6B the associated memory location contains information about 4 connections k1, k2, k3, k4. The information for each connection may comprise one or more of:
- An indication for a recipient neural unit (optionally including an indication of a processing module where the recipient neural unit resides)
- An delay with which a message is to be transmitted to the recipient neural unit
- A weight to be assigned by the recipient neural unit to the message
- Information indicative how the message is to be interpreted, e.g. to result in an incidental state change or a continuous state change, a gate setting etc.

The connections referred to may be connections to other neural units in the neural network or to a host interface. In case the connections do not yet include a connection to a host interface or if a connection is required to a separate host interface, step S2 provides for addition of connection information kh to a (separate) host interface.

A further mapping step may take place wherein the neural units are mapped into different modules in a neural processing system. In that case the mapping step may also extend the information with an indication of the module.

It is a disadvantage of the option illustrated in FIG. 6A-6C, that in execution of step S2 it is not possible to add a host connection without redesigning the neural network if the addressable memory location of the neural unit does not have a free slot.

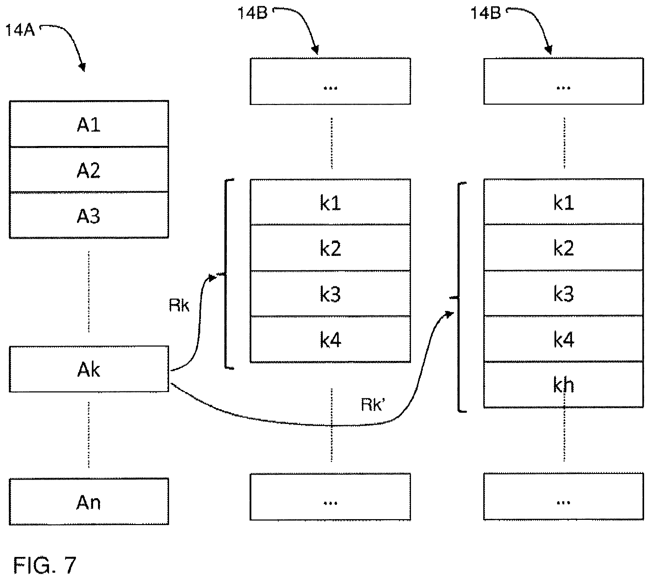

FIG. 7 shows an alternative option, wherein the connectivity information is specified as a range indication in a respective memory location in a range memory unit 14A, e.g. at address Ak for a neural unit with index k, wherein the range information specifies a range Rk of addresses in transfer connection memory unit 14B. Each addressable location of the transfer connection memory unit 14B in the designated address range specifies a transfer connection, e.g. k1, k2, k3, k4.

In step S2, the range Rk is extended with one to range Rk' to include an additional memory location in transfer connection memory unit 14B. Information kh specifying a transfer connection to the host interface for converting output messages into output data is then stored into the additional memory location in memory 14B. Should that additional memory location be already in use, it may be first released by reorganizing the content of transfer connection memory unit 14B and correspondingly adapting the address ranges specified in range memory unit 14A.

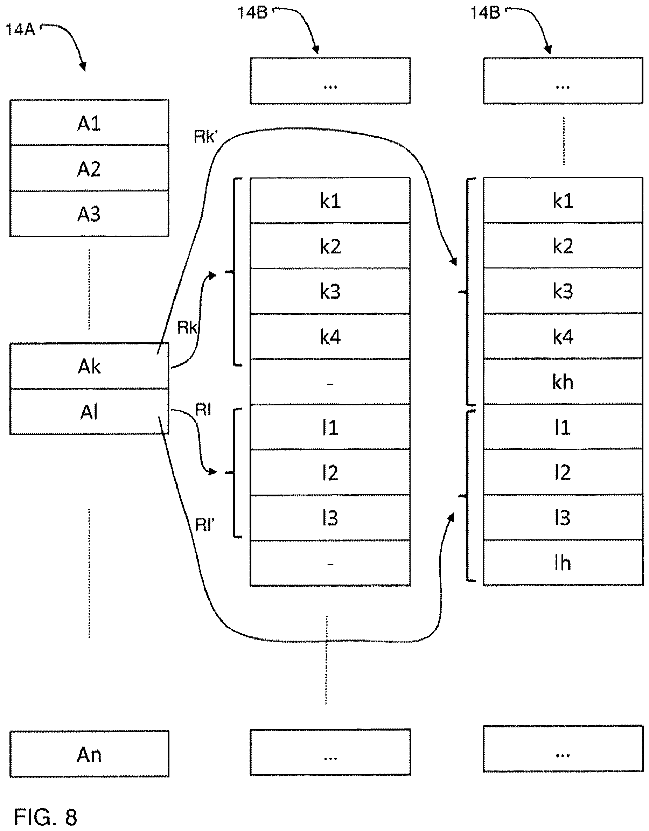

According to a still further option as shown in FIG. 8 the original network specification comprises for each neural unit at least one free addressable memory location in the transfer connection memory unit 14B at an address preceding or succeeding the range indicated for the neural unit in range memory unit 14A. For example, in FIG. 8 the transfer connection memory unit 14B has a free memory location for neural unit k at the address directly succeeding the range Rk, and a free memory location for neural unit 1 at the address directly succeeding the range Rl. This strongly simplifies the execution of step S2, in that it suffices to provide the information for the host connection in the free memory location and to extend the ranges Rk, Rl with one address to Rk' and Rl' respectively.

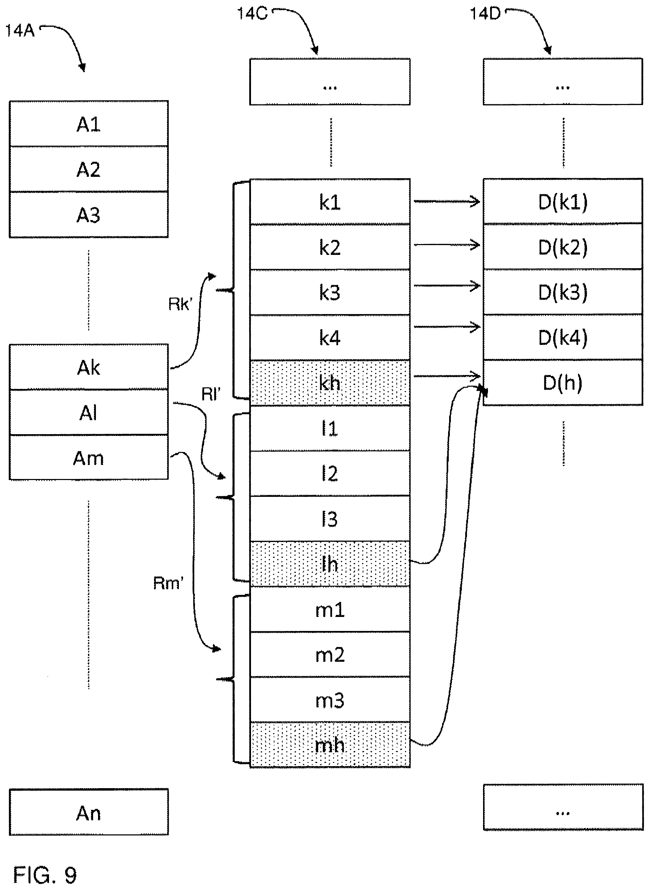

According to a still further option, the transfer connection information is distributed. In the example of FIG. 9, each memory location in transfer connection reference memory unit 14C includes a reference to a memory location in a transfer connection specification memory unit 14D. For example location k1 in connection reference memory unit 14C stores a reference to a location in transfer connection specification memory unit 14D comprising the connection data D(k1). Similarly locations k2, k3, k4 in connection reference memory unit 14C store a reference to a location in transfer connection specification memory unit 14D comprising the connection data D(k2), D(k3), D(k4). Analogously references to transfer connection specification memory unit 14D are provided for other neural units, e.g. in locations 11, 12, 13 for neural unit 1 and in locations m1, m2, m3 for neural unit m. This is advantageous, in that only a single memory location in transfer connection specification memory unit 14D is required for information concerning the connection that is independent of the identity of the transmitting neural unit. In particular that may be the case for the additional connections to the host interface that are added in step S2. For example each of the memory locations kh, lh, mh, that are used to specify the connection to the host may refer to the same location in transfer connection specification memory unit 14D comprising connection information D(h).

The (location of the) transfer connection specification memory unit 14D may be in a different processing module than the referring location in the transfer connection reference memory unit 14C. For example the transfer connection reference memory unit 14C comprising the referring memory location may reside in the processing module of the transmitting neural unit and the (location of the) transfer connection specification memory unit 14D may reside in the processing module that contains the recipient neural unit.

In one embodiment, the location in connection reference memory unit 14C may only comprise the reference to a memory location in a transfer connection specification memory unit 14D, and the location in transfer connection specification memory unit 14D may comprise all information specifying the connection. Alternatively, the location in connection reference memory unit 14C may additionally comprise part of the information specifying the connection, for example information about a delay with which the message is to be transferred. This is particularly advantageous if the (location of the) transfer connection specification memory unit 14D is not in the same processing module. In that case the information about the delay can be taken into account in determining priorities for the transmission over a message exchange network used by the processing modules.

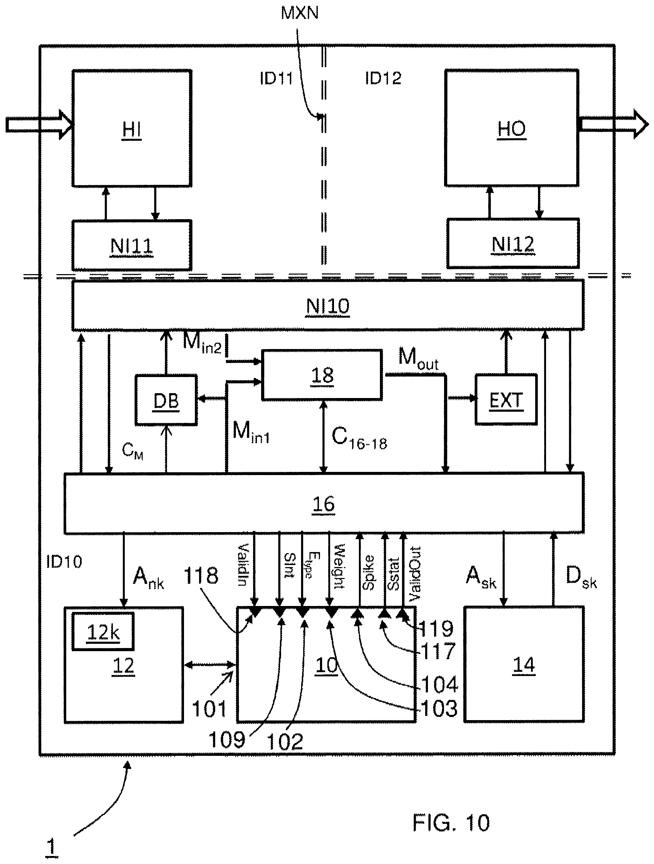

FIG. 10 shows a neuromorphic processing system 1 comprises a message exchange network MXN and at least one neural processor module ID10 connected as a network node to the message exchange network through its network interface NI10. Parts therein corresponding to those in FIG. 4 have the same reference numerals. The neuromorphic processing system 1 further comprises a processor module ID11 having a first host interface HI to be coupled to a host and to transmit data and instructions from the host to the at least one neural processor module ID10 via its network interface NI11. The neuromorphic processing system 1 further comprises a processor module ID12 having a second host interface HO to be coupled to a host and to transmit output data, e.g. including for example result data, debug data and diagnostic data which it receives from its network interface NI12 to the host.

The at least one neural processor module ID10 comprises at least one neural state memory unit 12, having respective addressable memory locations for storing a state of respective neural units, comprising e.g memory location 12k for storing a state of a neural unit with index k.

The at least one neural processor module ID10 comprises a network specification memory unit 14 for storing an original network specification, including a specification of message transfer connections for transfer of messages. The message transfer connections comprise internal message transfer connections between neural units of the neural network. An internal message transfer connection from a neural unit may be directed to itself or to another neural unit within the same neural processor module ID10 or in another neural processor module. The specification of the message transfer connection may in that case comprise separate components for specifying the other neural processor module and for identifying the neural unit on that other neural processor module.

The message transfer connections further comprise output message transfer connections from neural units of the neural network to module ID12 with the output host interface HO.

In the embodiment shown, the at least one neural processor module ID10 comprises a single network specification memory unit 14, the locations of which completely define the message transfer connections. Alternatively, a plurality of memory units may be used for the specification of the message transfer connections, for example as illustrated with reference to FIGs. 7, 8 and 9.

The at least one neural processor module ID10 comprises a shared processing facility 10 for computing the neural states in a time-multiplexed manner.

The at least one neural processor module ID10 is selectively operable in a first and a second operational mode. In the first operational mode the neural processor module ID10 executes the neural network by providing for a transfer of messages as specified by the original network specification. In the second operational mode the neural processor module ID10 in addition provides for a transfer of a copy of messages from the network node of the at least one neural processor module to the output host interface HO. To that end the at least one neural processor module ID10 comprises an additional debug message unit DB, which is controllable by the controller 16 with a mode control signal C_{M}. In the first operational mode the debug message unit DB is deactivated. In the second operational mode the debug message unit DB is activated to transmit a copy of internally generated messages Min1 to a host interface designated to receive the copied messages as debug messages. The debug message unit DB may extend the messages with an identification of the neural unit that was responsible for generating the message. The debug message unit DB may be configured to transmit a copy of each internally generated message, but may alternatively configured to transmit only a copy of messages generated by specifically selected neural units.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, unless expressly stated to the contrary, "or" refers to an inclusive or and not to an exclusive or. For example, a condition A or B is satisfied by any one of the following: A is true (or present) and B is false (or not present),

A is false (or not present) and B is true (or present), and both A and B are true (or present).

## Claims

1. A computer implemented method for assisting a designer in designing a neural network, the method comprising
- a computing device accessing a network specification memory unit with an original network specification, including a specification of message transfer connections for transfer of messages, the message transfer connections at least comprising internal message transfer connections between neural units of the neural network, and output message transfer connections from neural units of the neural network to an output host interface;
- a computing device modifying the original network specification to a modified network specification by including further output message transfer connections;
- a computing device executing the modified neural network, including repeatedly:
- computing neural states of neural units in the modified neural network;
- transmitting output messages via the output message transfer connections and/or the further output message transfer connections;
- converting output messages into output data to be provided to the designer.

2. The computer implemented method according to claim 1, wherein the message transfer connections in the original neural network specification further includes input message transfer connections from an input host interface to neural units of the neural network and wherein executing the modified neural network includes providing test data as a function of time and converting the test data into input messages to be transferred with the input message transfer connections.

3. The computer implemented method according to claim 1, wherein the output message transfer connections in the original network specification are message transfer connections from neural units of the neural network to a first output host interface and wherein the further output message transfer connections included in the modified network specification are message transfer connections from neural units of the neural network to a second output host interface.

4. The computer implemented method according to claim 1, wherein the modified neural network is executed by a neuromorphic processor that comprises a message exchange network and at least one neural processor module connected as a network node to the message exchange network, the at least one neural processor module comprising a neural state memory unit, having respective addressable memory locations for storing a state of respective neural units and a shared processing facility for computing the neural states in a time-multiplexed manner, the neural units of the at least one neural processor module having a common further output message transfer connections.

5. The computer implemented method according to one of the previous claims, wherein the computing device executing the neural net comprises a range memory unit that specifies for each neural unit a range of addressable locations in a transfer connection memory unit, each addressable location containing information about message transfer connections originating from said each neural unit, wherein including further output message transfer connections comprises extending the respective address range to include a further addressable memory location of the transfer connection memory unit, and storing therein information pertaining to a connection to a host interface for converting output messages into output data.

6. The computer implemented method according to claim 5, wherein the original network specification comprises for each neural unit at least one free addressable memory location in the transfer connection memory unit at an address preceding or succeeding the range indicated for said each neural unit, wherein including a further output message transfer connection comprises extending the respective address range to include the at least one free addressable memory location, and storing therein the information pertaining to the connection to the host interface for converting output messages into output data.

7. The computer implemented method according to one of the previous claims, wherein information about connections for transfer of messages originating from a neural unit is distributed as first connection information in a transfer connection reference memory unit (14C) and second connection information in a transfer connection specification memory unit (14D), wherein the first connection information of a connection at least comprises a reference to an addressable memory location in the transfer connection specification memory unit (14D) comprising the second information for said connection.

8. The computer implemented method according to claim 7, wherein the computing device comprises a message exchange network and a plurality of processing modules that communicate to each other via the message exchange network and that each comprise a respective transfer connection reference memory unit (14C) and a respective transfer connection specification memory unit (14D), wherein the first connection information of a connection is stored in a transfer connection reference memory unit (14C) of the processing module of the neural unit where the connection originates and the second connection information of the connection is stored in a transfer connection specification memory unit (14D) of the processing module of the neural unit to which the connection directed or of a host interface to which the connection is directed.

9. The computer implemented method according to claim 8, wherein the first connection information further comprises information about a delay with which messages are to be transmitted via the connection.

10. The computer implemented method according to claim 1, wherein said modifying comprises:
receiving user input specifying a neural unit in the neural network,
extending the specification of message transfer connections with a further output message transfer connection for the specified neural unit.

11. The computer implemented method according to claim 1, wherein said modifying comprises extending the specification of message transfer connections with a further output message transfer connection for each neural unit not having an output message transfer connection in the original network specification.

12. The computer implemented method according to claim 2, wherein said modifying comprises extending the specification of message transfer connections with further input message transfer connections.

13. The computer implemented method according to one of the previous claims, comprising displaying a visual representation of a state of the neural network as a function of time during execution, for example by displaying a visual representation of the neural network being executed and further visually representing therein the neural units and/or their message transfer connections in a manner dependent on their state.

14. System for assisting a designer in designing a neural network, the system comprising;
- a network specification memory unit for storing a network specification, including a specification of message transfer connections for transfer of messages, the message transfer connections at least comprising internal message transfer connections between neural units of the neural network, and output message transfer connections from neural units of the neural network to an output host interface;
- a network modification module for accessing an original network specification in the network specification memory unit and for modifying the original network specification to a modified network specification by including further output message transfer connections;
- a network execution module for repeatedly computing neural states of neural units in the modified neural network and converting output messages into output data to be provided to the designer.

15. A neuromorphic processing system comprises a message exchange network and at least one neural processor module connected as a network node to the message exchange network,
the at least one neural processor module comprising:
- at least one neural state memory unit, having respective addressable memory locations for storing a state of respective neural units;
- at least one network specification memory unit for storing an original network specification, including a specification of message transfer connections for transfer of messages, the message transfer connections at least comprising internal message transfer connections between neural units of the neural network, and output message transfer connections from neural units of the neural network to an output host interface; and
- a shared processing facility for computing the neural states in a time-multiplexed manner,
- the at least one neural processor module being selectively operable in a first and a second operational mode, operation in the first operational mode comprising executing the neural network by providing for a transfer of messages as specified by the original network specification, operation in the second operational mode comprising executing the neural network by providing for a transfer of messages as specified by the original network specification and in addition providing a transfer of a copy of each message from the network node of the at least one neural processor module to an output host interface.
